# EUROPÄISCHE PATENTSCHRIFT

(11) **EP 1 355 107 B1**
(45) Veröffentlichungstag und Bekanntmachung des Hinweises auf die Patenterteilung: **17.03.2010**
(21) Anmeldenummer: 03008404.0
(22) Anmeldetag: 11.04.2003
(51) Int. Cl.: F17C 1/14, F17C 13/08, F17C 1/06

(54) **Drucktank**
Pressure vessel
Réservoir sous pression

(30) Priorität: 15.04.2002 DE 10217246
(43) Veröffentlichungstag der Anmeldung: 22.10.2003
(73) Patentinhaber: Deutsches Zentrum für Luft- und Raumfahrt e.V., 51147 Köln (DE)
(72) Erfinder: Kochendörfer, Richard, Prof., 70619 Stuttgart (DE)
(74) Vertreter: Hoeger, Stellrecht & Partner Patentanwälte

(56) Entgegenhaltungen:
- WO-A-00/05535
- FR-A- 2 796 010
- US-A- 5 577 630

## Beschreibung

Die Erfindung betrifft einen Drucktank zur Aufnahme eines unter Druck stehenden Fluids.

Drucktanks zur Aufnahme eines unter Drucks stehenden Fluids, welche mindestens eine Aufnahmekammer mit einem sich in einer Längsrichtung erstreckenden Aufnahmeraum aufweisen, wobei der Aufnahmeraum durch Kammerwände begrenzt ist und der Aufnahmeraum in Längsrichtung durch ein Deckelelement geschlossen ist, sind beispielsweise aus der US 5,577,630 bekannt. Sie werden in Kraftfahrzeugen, beispielsweise als Speicher für gasförmige Kraftstoffe wie Erdgas, Wasserstoff oder Methanol eingesetzt.

Aus der WO 00/05535 A1 ist ein Drucktank bekannt, welcher Röhren umfasst, die Zellen bilden, die miteinander verbunden sind und über mindestens eine Öffnung radial in Verbindung stehen, damit unter Druck stehendes Gas von einer Zelle zu einer anderen zirkulieren kann. Eine äußere Hülle hält die Zellen zusammen.

Aus der FR 1 525 422 ist ein Verfahren zur Herstellung eines Behälters bekannt.

Davon ausgehend liegt der Erfindung die Aufgabe zugrunde, einen Drucktank der eingangs genannten Art zu schaffen, welcher eine hohe Stabilität aufweist.

Diese Aufgabe wird bei dem eingangs genannten Drucktank erfindungsgemäß mit den Merkmalen gemäß Anspruch 1 gelöst.

Ein Deckelelement wird zum Abschluß des Aufnahmeraums in Längsrichtung angeordnet. Es können dabei auch zwei gegenüberliegende Deckelelemente an entgegensetzten Enden vorgesehen sein. Diese lassen sich mit den entsprechenden Kammerwänden verbinden, beispielsweise durch Verlötung, Verschweißung oder Verklebung. Durch das unter Druck stehende Fluid in dem Aufnahmeraum wird auf die Deckel eine Kraft ausgeübt, welche eine Kraftkomponente in Richtung von dem Ende weg hat. Es besteht dadurch grundsätzlich die Gefahr, daß sich ein Deckelelement lösen kann und dadurch insbesondere ein Fluidverlust aus dem Aufnahmeraum eintritt. Durch die Umwicklung mit einem Faserverbundwerkstoff läßt sich dann ein Deckelelement halten oder zusätzlich sichern, so daß insgesamt die Stabilität des Drucktanks erhöht wird.

Ein Faserverbundwerkstoff weist bei entsprechender Ausrichtung der Fasern eine Vorzugsrichtung bezüglich seiner mechanischen Eigenschaften auf, nämlich in Längsrichtung der Fasern. In dieser Längsrichtung liegt eine hohe mechanische Festigkeit vor. Durch die Umwicklung kann diese hohe Festigkeit dann dazu verwendet werden, um einen Deckel gewissermaßen extern an einer Aufnahmekammer zu verspannen. Durch die Umwicklung lassen sich auch die auf den Deckel wirkenden Kräfte gezielt in Faserrichtung ableiten, um so beispielsweise auch bei gegenüberliegenden Deckeln eine mindestens teilweise Kräftekompensation erreichen zu können.

Weiterhin ist ein Übergang zwischen dem Deckelelement und den Kammerwänden, an denen das Deckelelement sitzt, glatt. Da dadurch ein im wesentlichen stetig differenzierbarer Übergang erreichbar ist, an welchem Kanten, Vorsprünge oder Rücksprünge vermieden sind, läßt sich eine Kraftbelastung der Fasern des Verbundwerkstoffes quer zu ihren Längsrichtungen minimieren.

Eine enge Anlegbarkeit von Umwicklungen an einem Deckelelement ist gewährleistet, wenn ein Deckelelement gewölbt ausgebildet ist mit einer Scheitellinie. Die Umwicklung erfolgt dann vorzugsweise so, daß eine Wicklungsrichtung quer zur Scheitelebene liegt.

Insbesondere ist dabei das Deckelelement innerhalb einer Umwicklungsschleife angeordnet, so daß dieses über eine Umwicklungsschleife gehalten oder zusätzlich gesichert werden kann.

Weiterhin ist das Deckelelement innerhalb einer Umwicklungskehre angeordnet. In einer solchen Umwicklungskehre ändert sich die Richtung der Fasern, so daß entsprechend diese an das Deckelelement anlegbar sind. Es läßt sich damit der gesamte Drucktank über Umwicklungen von dem Faserverbundwerkstoff umgeben, um so wiederum ein sicheres Halten der Deckelelemente oder eines Deckelelements an einer Aufnahmekammer zu erreichen.

Insbesondere ändert sich dabei im Bereich eines Deckelelements die Windungsrichtung von im wesentlichen parallel zur Längsrichtung in quer dazu. Dadurch läßt sich gerade eine Aufnahmekammer mit Deckelelement umwickeln, um den Deckel so sicher an der Aufnahmekammer zu halten.

Insbesondere ist das Deckelelement so ausgebildet, daß Wicklungen an diesem anlegbar sind, so daß insbesondere auch eine Verspannung zwischen gegenüberliegenden Deckelelementen relativ zueinander erreichbar ist. Durch ein enges Anliegen lassen sich auch Relativverschiebungen zwischen dem Deckelelement bzw. der Aufnahmekammer und dem Faserverbundwerkstoff vermeiden, welches zu einem Durchscheuern führen könnte.

Insbesondere weist das Deckelelement eine glatte Oberfläche auf, um so eine enge Anlegbarkeit der Umwicklungen zu gewährleisten. Es können dann auch Bänder zur Umwicklung eingesetzt werden.

Vorteilhafterweise ist das Deckelelement im Querschnitt kreisbogenförmig, das heißt halbzylindrisch ausgebildet. Dadurch läßt sich auf einfache Weise ein glatter Übergang zwischen Kammerwänden und dem Deckelelement erreichen und auch eine Anlegbarkeit der Umwicklungen an das Deckelelement ist gewährleistet.

Es kann vorgesehen sein, daß das Deckelelement dadurch mit Kammerwänden verbunden ist, daß es mit diesen verlötet, verschweißt oder verklebt ist. Alternativ oder zusätzlich könne auch formschlüssige Verbindungen wie Schrauben-oder Bolzenverbindungen vorgesehen sein. Die Umwicklungen dienen dann zur zusätzlichen Sicherung dieser Verbindungsvorrichtung.

Es ist eine Mehrzahl von Aufnahmeräumen vorgesehen, welche in Längsrichtung durch ein gemeinsames Deckelelement abgeschlossen sind. Eine Druckkammer, welche eine Mehrzahl von Aufnahmekammern aufweist, welche insbesondere wabenförmig angeordnet sind, läßt sich auf vorteilhafte Weise einsetzen; insbesondere lassen sich Wände so ausbilden, daß deren Spannungen minimiert sind. Auch läßt sich die äußere Form eines solchen Mehrkammern-Drucktanks an entsprechende Gegebenheiten, beispielsweise in einem Kraftfahrzeug, anpassen. Durch ein gemeinsames Deckelelement für die Mehrzahl von Aufnahmeräumen wird die Herstellung erleichtert, da die Zusammensetzung erleichtert ist. Ein solches gemeinsames Deckelelement kann dann auch bei entsprechender Ausgestaltung seiner Oberfläche umwickelt werden, um dieses zusätzlich gesichert in dem Deckelelement zu halten. Dadurch lassen sich die oben beschriebenen Vorteile erreichen.

Es kann dabei insbesondere vorgesehen sein, daß das Deckelelement so ausgebildet ist, daß eine Fluidverbindung zwischen Aufnahmeräumen hergestellt ist. Dies kann dadurch erfolgen, daß in das Deckelelement entsprechende Fluidverbindungsvorrichtungen integriert sind, beispielsweise Rohrverbindungen, die bestimmte Aufnahmeräume miteinander verbinden. Es kann auch vorgesehen sein, daß das Deckelelement in seinem Innenbereich Durchgangsräume aufweist, welche für die fluidwirksame Verbindung sorgen. Es müssen dann keine externen Rohrsysteme außerhalb des Deckelelementes vorgesehen werden, die, da sie ungeschützt angeordnet sind, störanfälliger sind. Außerdem läßt sich dann der erfindungsgemäße Drucktank bei gleichem Platzbedarf, wie wenn externe Rohrverbindungen vorgesehen werden müssen, mit einem höheren Aufnahmevolumen versehen bzw. bei gleichem Aufnahmevolumen kleiner ausgestalten.

Bei einer weiteren Ausführungsform ist ein Aufnahmeraum durch eine Aufnahmehülle aus einem fluiddichten Material begrenzt. Diese Aufnahmehülle, die eine gewisse Eigenstabilität aufweisen muß, nimmt dann das Fluid auf.

Vorteilhafterweise ist dabei eine Aufnahmehülle mittels gewölbten Kammerwänden gebildet, welche auf im wesentlichen ebene Kammerwände sitzen. Dadurch läßt sich die Kraftbelastung der Kammerwände minimieren.

Insbesondere ist der Abstand gegenüberliegender gewölbter Kammerwände größer als der Abstand gegenüberliegender ebener Kammerwände, um so bei minimaler Kraftbelastung ein hohes Aufnahmevolumen erzielen zu können.

Ganz besonders vorteilhaft ist es dann, wenn eine Aufnahmehülle durch einen Faserverbundwerkstoff umwickelt ist, wobei weiterhin die Umwicklung so durchgeführt ist, daß eine Faserrichtung im wesentlichen parallel zu einer längeren Seite der Aufnahmehülle ist. Dadurch läßt sich die Festigkeit der Aufnahmehülle mittels der gebildeten Aufnahmekammer erhöhen, da entsprechend Kräfte über den Faserverbundwerkstoff abgeleitet und teilweise kompensiert werden können. Die Faserrichtung kann auch senkrecht zu dieser längeren Seite sein.

Es kann vorgesehen sein, daß eine Mehrzahl von Aufnahmehüllen durch Umwicklung mit einem Faserverbundwerkstoff zu einem Aufnahmehüllen-Verbund verbunden sind. Die Umwicklung hält dann die einzelnen Aufnahmehüllen, die selber umwickelt sein können, in dem Verbund zusammen. Es läßt sich dann ein Deckelelement für einen solchen Aufnahmehüllen-Verbund umwickeln, um dieses an dem Verbund zu sichern. Zusammen mit dem Wicklungsschritt, bei dem das Deckelelement an dem Aufnahmehüllen-Verbund zusätzlich fixiert bzw. gesichert wird, lassen sich beispielsweise noch Befestigungsvorrichtungen in den Aufnahmehüllen-Verbund integrieren. Dabei kann es sich beispielsweise um Gestänge mit außenliegenden Ösen handeln, über die der entsprechend hergestellte erfindungsgemäße Drucktank an einer Anwendung wie einer Fahrzeugkarosserie montierbar ist.

Bei dem Faserverbundwerkstoff kann es sich um ein GFK-, CFK-Material oder faserverstärktes Metall oder einen metalldrahtverstärkten Kunststoff handeln; beispielsweise glasfaserverstärkte Kompositmaterialien oder carbonfaserverstärkte Kompositmaterialien weisen hohe Festigkeiten bezüglich der Faserlängsrichtungen auf, um so ein sicheres Halten eines Deckelelementes in einem Drucktank zu erreichen bzw. eine gute zusätzliche Sicherung des Deckelelementes zu erhalten.

Es ist dabei weiterhin vorgesehen, daß der Faserverbundwerkstoff imprägniert ist. Es wird dann der Faserverbundwerkstoff trocken aufgewickelt und anschließend beispielsweise mit einem Flüssigharz oder einem niederschmelzenden Metall infiltriert, um so eben den Faserverbundwerkstoff zu imprägnieren.

Insbesondere ist es vorteilhaft, wenn einem Aufnahmeraum ein Rückschlagventil zugeordnet ist. Durch ein solches Rückschlagventil läßt sich verhindern, daß sich der gesamte Drucktank entleert, falls eine der Aufnahmekammern ein Leck hat, wenn die einzelnen Aufnahmeräume in Fluidverbindung miteinander stehen.

Insbesondere sind dabei das oder die Rückschlagventile mit dem Deckelelement verbunden und beispielsweise in diesem angeordnet. Ist das Deckelelement bezüglich eines Aufnahmeraums fluiddicht an diesem gehalten, so läßt sich der Innenraum des Drucktanks in die einzelnen Aufnahmeräume aufteilen und in einen Bereich außerhalb der Aufnahmeräume, welcher eben für die fluiddichte Verbindung zwischen den einzelnen Aufnahmeräumen steht. Zwischen den Aufnahmeräumen und eben diesem Verbindungsraum sind dann die entsprechenden Rückschlagventile angeordnet. Ist dann das Rückschlagventil so ausgebildet, daß dieses schließt, wenn eine bestimmte Druckdifferenz zwischen dem zugeordneten Aufnahmeraum und einem Deckelraum überschritten ist, dann wird dadurch gerade ein Aufnahmeraum gegenüber einem Deckelraum verschlossen, wenn diese Druckdifferenz eintritt. Folgt dieser Eintritt einer Druckdifferenz aufgrund eines Lecks in irgendeinem Aufnahmeraum, dann schließen also die zugeordneten Rückschlagventile die anderen Aufnahmeräume gegenüber dem Deckelraum ab, das heißt die fluiddichte Verbindung wird unterbrochen. Die einzelnen Aufnahmeräume werden also bezüglich des Fluidübergangs voneinander isoliert.

Es kann vorgesehen sein, daß ein Deckelelement mit mindestens einer Lasche versehen ist, über welches das Deckelelement bezüglich des Aufnahmeraums fixierbar ist und/oder eine fluiddichte Abdichtung zwischen Deckelement und Aufnahmeraum herstellbar ist. Eine Lasche kann dabei so ausgebildet sein, daß sie an eine Innenfläche der einen Aufnahmeraum begrenzenden Wände anlegbar ist oder an eine Außenfläche dieser Wände anlegbar ist. Eine solche Lasche kann insbesondere konisch ausgebildet sein. Über sie läßt sich dann das Deckelelement mit der Aufnahmekammer beispielsweise verlöten, verschweißen oder verkleben und damit eine Abdichtung herstellen.

Es kann alternativ oder zusätzlich auch vorgesehen sein, daß eine Aufnahmekammer an einer Stirnseite mit einem Halteteil oder Abdichtteil, beispielsweise einem Halteblech, versehen ist, an welchem ein Deckelelement fixierbar ist und/oder über welches eine fluiddichte Abdichtung bezüglich des Deckelelementes herstellbar ist. Über solche Halteteile, welche beispielsweise als Abdichtbleche ausgebildet sind und die eingeschweißt oder eingeklebt an der Aufnahmekammer gehalten sind, läßt sich eine Kammerwand stirnseitig abdichten. Darauf läßt sich dann ein Deckelelement aufsetzen, welches druckdicht mit der entsprechenden Aufnahmekammer beispielsweise verlötet, verschweißt oder verklebt wird.

Ganz besonders vorteilhaft ist es, wenn eine Befestigungsvorrichtung für den Drucktank durch eine Umwicklung an diesem fixiert ist. Durch die Umwicklung wird eine solche Befestigungsvorrichtung, welche beispielsweise ein Gestänge mit Ösen umfaßt, an dem Drucktank gehalten und/oder gesichert. Dadurch läßt sich die Befestigungsvorrichtung während der Umwicklung (und nachfolgender Imprägnierung) an dem Drucktank fixieren, das heißt in den umwickelten Drucktank integrieren.

Die nachfolgende Beschreibung bevorzugter Ausführungsformen dient im Zusammenhang mit der Zeichnung der näheren Erläuterung der Erfindung. Es zeigen:
- Figur 1: eine schematische perspektivische Darstellung eines ersten Ausführungsbeispiels eines erfindungsgemäßen einzelligen Drucktanks;
- Figur 2: eine Draufsicht auf ein zweites Ausführungsbeispiel eines erfindungsgemäßen Drucktanks;
- Figur 3: eine perspektivische Schnittdarstellung eines dritten Ausführungsbeispiels eines erfindungsgemäßen dreizelligen Drucktanks;
- Figur 4: eine Schnittdarstellung eines vierten Ausführungsbeispiels eines erfindungsgemäßen neunzelligen Drucktanks;
- Figur 5: eine Teil-Schnittdarstellung des Drucktanks gemäß Figur 3 mit einem Halteteil zur Abdichtung einer Aufnahmekammer;
- Figur 6: eine Schnittdarstellung einer Ausführungsform eines erfindungsgemäßen Drucktanks mit einem fixierten Deckelelement;
- Figur 7: eine schematische Teil-Schnittansicht eines Deckelelements mit einem integrierten Rückschlagventil und
- Figur 8: eine perspektivische Ansicht eines Drucktanks.

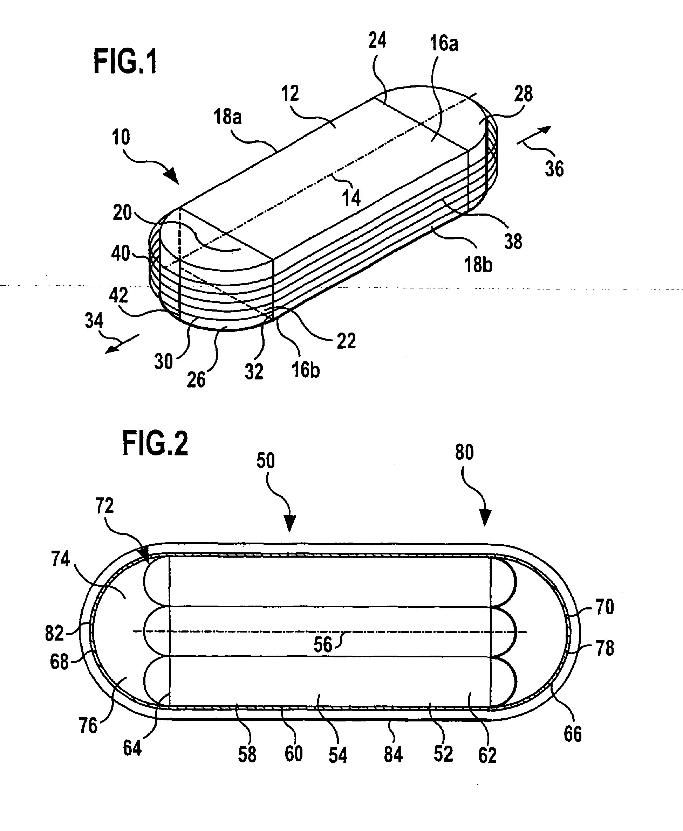

Bei einem ersten Ausführungsbeispiel eines erfindungsgemäßen Drucktanks, welcher in Figur 1 als Ganzes mit 10 bezeichnet ist, ist eine Aufnahmekammer 12 vorgesehen, welche sich in einer Längsrichtung 14 erstreckt. Diese Aufnahmekammer umfaßt gegenüberliegende Kammerwände 16a, 16b und 18a, 18b, zwischen welchen ein Aufnahmeraum 20 zur Aufnahme eines unter Druck stehenden Fluids, bei dem es sich insbesondere um eine Flüssigkeit oder Gas handelt, gebildet ist.

Die Kammerwände 16a, 16b liegen dabei quer und insbesondere senkrecht zu den Kammerwänden 18a, 18b, so daß der Aufnahmeraum 20 im Querschnitt rechteckförmig und beispielsweise quaderförmig ausgebildet ist. Vorzugsweise sind Übergänge an querliegenden Kammerwänden verrundet ausgebildet.

Es kann aber auch vorgesehen sein, daß der Aufnahmeraum eine zylindrische oder gewölbte Gestalt hat, wenn entsprechend eine Kammerwand eine Zylinderwand ist.

Der Aufnahmeraum 20 ist an seinen gegenüberliegenden Enden 22 und 24 jeweils durch ein Deckelelement 26, 28 druckdicht abgeschlossen. Die Deckelelemente 26 und 28 sind dabei mit den Kammerwänden 16a, 16b und 18a, 18b verbunden, indem sie beispielsweise mit entsprechenden Stirnflächen verschweißt oder verklebt sind.

Ein Deckelelement 26, 28 ist nach außen hin gewölbt ausgebildet, beispielsweise in der Form einer Halbzylinder-Schale mit einer Scheitellinie quer zur Längsrichtung 42. Diese gewölbte Ausbildung kann auch auf der den Aufnahmeraum 20 begrenzenden Innenseite vorgesehen sein. Eine Oberfläche eines Deckelelements 26, 28 ist so glatt ausgebildet, daß Faserwicklungen 30 an diese anlegbar sind. Ein Übergangsbereich 32 zwischen einer Außenseite der Aufnahmekammer 12 und dem Deckelelement 16 ist ebenfalls glatt (stetig differenzierbar) ausgebildet, so daß keine Stufen oder dergleichen vorhanden sind.

Die Deckelelemente 26, 28 werden durch die Faserwicklungen 30 zusätzlich an der Aufnahmekammer 12 gesichert, um so Kräfte, welche auf die Deckelelemente 26, 28 wirken, abfangen zu können.

Durch ein druckbeaufschlagtes Fluid in dem Aufnahmeraum 20 wird auf das Deckelelement 26 eine Druckkraft in einer Richtung 34 ausgeübt, während das Deckelelement 28 eine Druckkraft in die Gegenrichtung 36 erfährt. Durch die Faserwicklungen 30 lassen sich dann die beiden Deckelelemente 26 und 28 miteinander verspannen und dabei die entsprechenden Kräfte insbesondere längs Faserrichtungen der Faserwicklungen 30 ableiten. Dadurch lassen sich Zugspannungen ableiten, was eben die Sicherung der Deckelelemente 26, 28 an der Aufnahmekammer 12 bewirkt.

Die Faserwicklungen 30 umfassen Wicklungsschleifen 38, welche in mehrfacher Windung eine Außenseite der Aufnahmekammer 12 und die Deckelelemente 26, 28 umgeben. Dadurch sind die Deckelelemente 26, 28 innerhalb solcher Umwicklungsschleifen 38 gelegen und dabei insbesondere innerhalb von Umwicklungskehren 40 gelegen.

Längs einer Außenseite der Aufnahmekammer 12 sind die Wicklungsschleifen 38 im wesentlichen parallel zu der Längsrichtung 14 orientiert. Im Bereich einer Wicklungskehre 40 folgen diese dann der Außenkontur der jeweiligen Deckelelemente 26, 28 und ändern damit ihre Windungsrichtung quer zur Längsrichtung 14. An einer Scheitellinie 42 der Deckelelemente 26, 28 dreht sich dann die Windungsrichtung um in eine Gegenrichtung.

Die Faserwicklung 30 ist dabei insbesondere derart ausgestaltet, daß eine längere Seite der Aufnahmekammer 12 parallel zu Faserrichtungen liegt, so daß entsprechend die Kräfte in die Richtungen 34 und 36 in hohem Maße kompensierbar sind. Die Fasern des Faserverbundwerkstoffes weisen in ihrer Längsrichtung eine hohe Zugfestigkeit aus. Bei der Anordnung der Faserwicklungen 30 eben längs der Aufnahmekammer 12 entlang dieser läßt sich dann diese hohe Zugfestigkeit dazu nutzen, um gewissermaßen die Deckelelemente 26 und 28 miteinander an der Aufnahmekammer 12 zu verspannen, um so diese gesichert zu halten.

Bei dem Werkstoff für die Faserwicklungen 30 handelt es sich beispielsweise um ein GFK- oder CFK-Material, das heißt um ein glasfaserverstärktes Kompositmaterial oder um ein kohlenstofffaserverstärktes Kompositmaterial. Insbesondere wird nach der Umwicklung noch eine Imprägnierung durchgeführt.

Bei einem zweiten Ausführungsbeispiel eines erfindungsgemäßen Drucktanks, welcher in Figur 2 als Ganzes mit 50 bezeichnet ist, weist dieser eine Mehrzahl von Aufnahmekammern 52 auf, welche in Reihen und Spalten angeordnet sind. Bei der schematischen Draufsicht gemäß Figur 2 sind drei Reihen gezeigt. Dadurch weist der Drucktank 50 eine Mehrzahl von Aufnahmeräumen 54 auf, welche sich in parallele Längsrichtungen 56 erstrecken. Die Aufnahmeräume 54 sind durch Kammerwände 58 begrenzt. Es gibt dabei nach außen weisende Kammerwände 60 und innen liegende Kammerwände (in der Figur 2 nicht gezeigt). Nach außen weisende Kammerwände 60 sind gewölbt ausgebildet, wobei insbesondere eine Kammerwand 60, welche entweder eine Reihe oder eine Spalte abschließt, halbzylinder-schalenförmig ausgebildet ist und eine gewölbte Kammerwand, welche sowohl eine Reihe als auch eine Spalte abschließt (Kammerwand 62 in Figur 2) näherungsweise die Form einer Dreiviertel-Zylinderschale hat. Die Zylinderachse ist dabei parallel zur Längsrichtung 56.

Die Länge einer Aufnahmekammer 52 in der Längsrichtung 56 ist größer und insbesondere erheblich größer als eine Breite der Aufnahmekammer 52 quer dazu.

Für diese Aufnahmekammern-Anordnung, welche eine Mehrzahl von Aufnahmeräumen 54 umfaßt, ist zum Abschluß in der Längsrichtung 56 an dem einen Ende 64 und an dem anderen gegenüberliegenden Ende 66 jeweils ein einziges Deckelelement 68 bzw. 70 vorgesehen. Die beiden Deckelelemente 68, 70 schließen damit den Drucktank 50 an den Enden 84 und 66 druckdicht gegenüber dem Außenraum ab, wobei dann nicht für jeden einzelnen Aufnahmeraum 54 ein gesondertes Deckelelement vorgesehen wird, sondern ein Gesamtdeckelelement 68 bzw. 70 für das längsseitige Ende 64 bzw. 66.

Ein solches Deckelelement 68 bzw. 70 sitzt dabei an äußeren Kammerwänden und ist insbesondere mit diesen verschweißt oder verklebt.

Es kann vorgesehen sein, daß innerhalb eines solchen Deckelelementes 68, 70 eine Verstärkungsstruktur 72 angeordnet ist, welche beispielsweise Bogenelemente 74 umfaßt, die auch mit Zwischenwänden zwischen benachbarten Aufnahmekammern verbindbar sind. Auf diese Weise läßt sich dann eine größere Verbindungsfläche erreichen, um so die Deckelelemente 68, 70 sicher an dem Drucktank halten zu können.

Ein Innenbereich 76 eines Deckelelementes 68 bzw. 70 ist dabei so ausgebildet, daß ein Fluidaustausch zwischen den verschiedenen Aufnahmeräumen 54 möglich ist. Dies kann beispielsweise dadurch erfolgen, daß der Innenbereich einen Übergangsraum aufweist, welcher mit allen Aufnahmeräumen 54 verbunden ist.

Es kann aber auch vorgesehen sein, daß ein Rohrsystem zur Verbindung von bestimmten Aufnahmeräumen 54 in diesem Innenbereich 76 angeordnet ist.

Die einzelnen Aufnahmeräume 54 müssen dann durch keine externes Rohrsystem verbunden werden. Dadurch läßt sich der Platzbedarf für den Drucktank 50 gering halten. Da auch solche externen Rohrverbindungen sicherheitsrelevant sein können, erhöht sich insgesamt bei der Anordnung eines erfindungsgemäßen Drucktanks 50 im Fahrzeug die Sicherheit, da die Fluidaustauschvorrichtungen zum Fluidaustausch zwischen den Aufnahmeräumen 54 durch die Deckelelemente 68 und 70 geschützt sind.

Die Deckelelemente 68, 70 weisen eine glatte Oberfläche 78 auf und auch ein Übergangsbereich 80 zwischen den Aufnahmekammern 52 und den Deckelelementen 68, 70 ist glatt ausgestaltet, so daß insbesondere keine Stufen oder Vorsprünge oder Hintersprünge vorliegen.

Die Deckelelemente 68, 70 sind gewölbt ausgebildet mit einer Scheitellinie 82, welche quer und insbesondere senkrecht zu den Längsrichtungen 56 ist.

Der Drucktank 50 ist, wie oben anhand des ersten Ausführungsbeispiels beschrieben, mit einem Faserverbundwerkstoff in Wicklungen 84 umwickelt, um so die beiden gegenüberliegenden Deckelelemente 68, 70 miteinander verspannt an dem Aufnahmekammern-Verbund zu halten und damit wiederum die Verbindung der Deckelelemente 68, 70 mit diesem Aufnahmekammern-Verbund zu sichern. Die Faserrichtung ist dabei, wie bereits oben beschrieben, längs des Aufnahmekammern-Verbunds im wesentlichen parallel (und/oder senkrecht) zu den Längsrichtungen 52 mit einer Faserausrichtung eben parallel zu dieser Richtung.

Ansonsten sind die Wicklungen 84 gleich ausgebildet wie oben anhand des ersten Ausführungsbeispiels beschrieben.

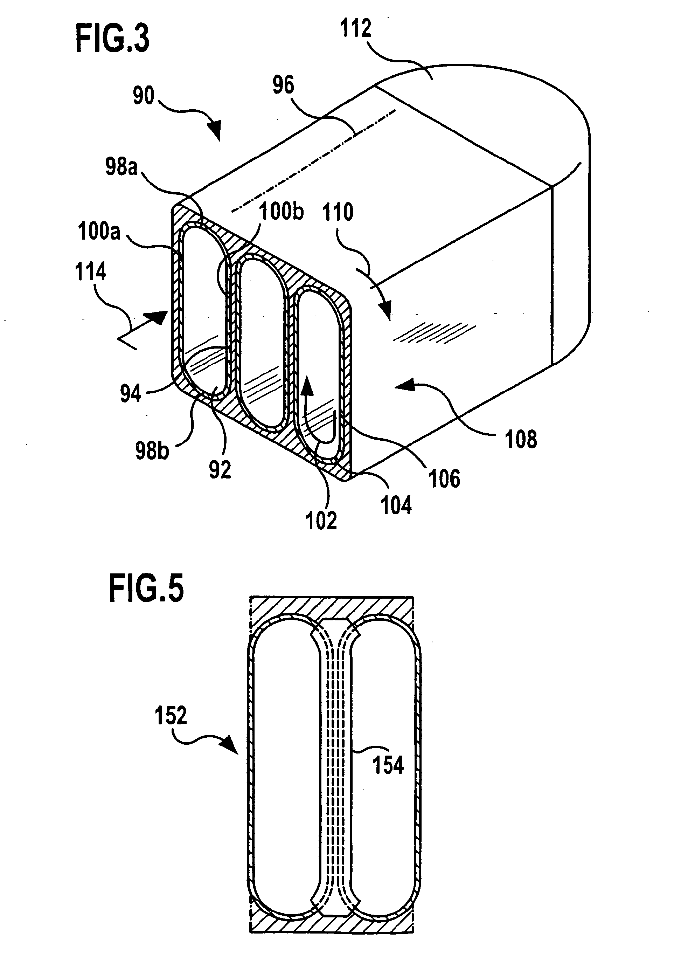

Bei einem dritten Ausführungsbeispiel eines erfindungsgemäßen Drucktanks, welcher als Ganzes in Figur 3 mit 90 bezeichnet ist, ist wiederum eine Mehrzahl von Aufnahmeräumen 92 vorgesehen. Ein einzelner Aufnahmeraum ist dabei durch eine Aufnahmehülle 94 (Innenliner) begrenzt, welche aus einem fluiddichten Material wie beispielsweise Magnesium oder Aluminium hergestellt ist. Eine solche Aufnahmehülle 94 erstreckt sich in einer Längsrichtung 96 und weist gegenüberliegende offene Enden auf.

Eine Aufnahmehülle 94 weist gegenüberliegende gewölbte Kammerwände 98a, 98b und gegenüberliegende ebene Kammerwände 100a, 100b auf.

Die gewölbten Kammerwände 98a, 98b sitzen einstückig an den ebenen Kammerwänden 100a, 100b, wobei der Abstand zwischen den gewölbten Kammerwänden 98a, 98b größer ist als der Abstand zwischen den gegenüber liegenden ebenen Kammerwänden 100a, 100b, so daß eine Aufnahmehülle 94 eine näherungsweise ovale Gestalt hat.

Eine solche Aufnahmehülle 94 ist zur Bildung einer Aufnahmekammer mit einer Wicklungsrichtung 102 entsprechend einer Umfangsrichtung durch ein Faserverbundwerkstoff-Material 104 umwickelt, um die Stabilität des Drucktanks 90 zu erhöhen. Die Umwicklung ist dabei derart, daß Fasern parallel und oder senkrecht zu den ebenen Kammerwänden 100a, 100b verlaufen, um so eben in den entsprechenden Richtungen eine hohe mechanische Festigkeit zu erreichen. Die Fasern verlaufen insbesondere um den äußeren Umfang der Aufnahmehülle 94.

Der Faserverbundwerkstoff ist insbesondere imprägniert.

Mehrere solcher Aufnahmekammern 106, welche durch Umwicklung der Kammerwände 98a, 98b, 100a und 100b hergestellt werden, werden dann zu einem Aufnahmekammern-Verbund zusammengestellt; in diesem stehen die Aufnahmekammern 106 in einer Reihe 108 nebeneinander. Diese Reihe wiederum wird dann in einer Wicklungsrichtung 110 umwickelt, um so den Verbund zusammen zu halten. Hierzu wird wiederum insbesondere ein Faserverbundwerkstoff eingesetzt. Die Wicklungsrichtung 110 ist dabei quer zu den jeweiligen Längsrichtungen 96. Sie entspricht der Wicklungsrichtung 102 zur Herstellung der einzelnen Aufnahmekammern 106.

Die Aufnahmekammern in der Reihe 108 werden an den jeweiligen längsseitigen Enden durch ein Deckelelement 112 geschlossen (in Figur 3 ist nur das hintere Deckelelement gezeigt). Dieses weist wie oben beschrieben beispielsweise eine halbzylindrische Schalengestalt auf.

In einer Wicklungsrichtung 114 werden dann die Deckelelemente 112 der Reihe 108 der Aufnahmekammern 106 im Aufnahmekammern-Verbund umwickelt, wobei eine Faserrichtung parallel und oder senkrecht zu den Längsrichtungen 96 verläuft und bei der Umlegung an den Deckelelementen 112 dann entsprechend quer dazu. Dadurch wiederum lassen sich die gegenüberliegenden Deckelelemente relativ zueinander verspannen und sich so die Fixierung der Deckelelemente im Aufnahmekammern-Verbund sichern.

Wie oben beschrieben können dabei Fluidverbindungsvorrichtungen in die Deckelelemente 112 integriert sein, um für eine fluidwirksame Verbindung zwischen den einzelnen Aufnahmeräumen 92 zu sorgen.

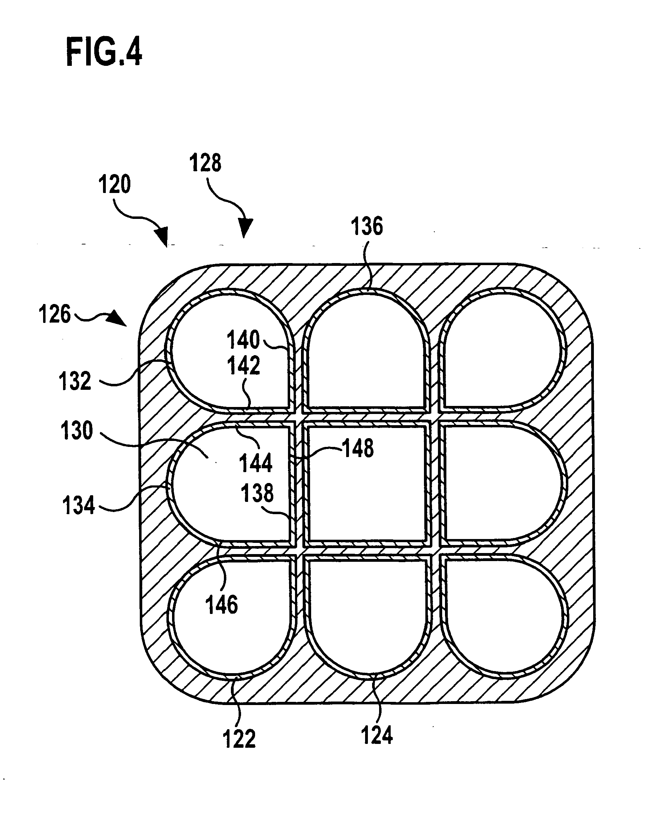

Bei einem vierten Ausführungsbeispiel 120 eines Drucktanks, welches in Figur 4 gezeigt ist, sind die einzelnen Aufnahmekammern 122 durch Strangpreßprofile 124 gebildet, welche in Zeilen 126 und Spalten 128 angeordnet sind. In diesen Zeilen 126 und Spalten 128 liegen die Aufnahmekammern 122 nebeneinander bzw. übereinander in der Art einer Stapelung. Die Strangpreßprofile 124 können dabei noch zusätzlich miteinander verbunden sein, beispielsweise über Schwalbenschwanzverbindungen (in Figur 4 gezeigt). In den einzelnen Aufnahmekammern 122 können Öffnungen zu benachbarten Aufnahmekammern hin gebildet sein, um einen Fluidübertritt zwischen benachbarten Aufnahmeräumen 130 zu ermöglichen.

Nach außen hin weisende Kammerwände 132, 134, 136 sind gewölbt ausgebildet, wobei diese gewölbten Kammerwände selber an ebenen Kammerwänden 138 sitzen. Die gewölbte Kammerwand 132 beispielsweise, welche außen sowohl in einer Zeile 126 als auch in einer Spalte 128 liegt, sitzt an quer zueinander stehenden Kammerwänden 140, 142; der Übergang zwischen den Kammerwänden 140 und 142 ist abgerundet.

Die Kammerwand 134, welche eine Aufnahmekammer begrenzt, die bezüglich einer Zeile 126 außen liegt, sitzt an ebenen Kammerwänden 144 und 146, welche wiederum über eine Kammerwand 148 verbunden sind.

Der Aufnahmekammern-Verbund ist dabei wie oben beschrieben umwickelt, um die einzelnen Aufnahmekammern im Verbund zuhalten oder zusätzlich zu sichern. Ein entsprechendes Deckelelement ist dann wiederum mit diesem Aufnahmekammern-Verbund verbunden.

Die einzelnen Aufnahmekammern 122 sind so in dem Aufnahmekammern-Verbund angeordnet, daß sich Kräfte auf die gewölbten Kammerwände 132, 134, 136 als unidirektionale Zugspannungen über die entsprechenden ebenen Kammerwände ableiten lassen.

Die Strangpreßprofile 122, die Aufnahmehüllen (Innenliner) bilden, lassen sich insbesondere in einem kontinuierlichen Herstellungsprozeß fertigen.

Um ein Deckelelement mit einer oder mehreren Aufnahmekammern 152 zu fixieren, welche insbesondere mittels eines faserverstärkten Materials hergestellt sind, kann ein stirnseitiges Ende einer solchen Aufnahmekammer 152 (wie in Figur 5 gezeigt) mit einem Halteblech 154 versehen sein. Dieses Halteblech dient als Abdichtteil für eben die Stirnseite der Aufnahmekammer 152. Das Abdichtblech kann dabei auch so überlappend bezüglich benachbarter Aufnahmekammern 152 angeordnet sein, daß durch diese eben entsprechende benachbarte Stirnseiten zweier Aufnahmekammern 152 abgedichtet werden.

Ein solches Abdichtblech 154 kann dabei in der oder den Aufnahmekammern 152 beispielsweise eingeschweißt oder eingeklebt sein.

An einem Abdichtblech 154 wiederum läßt sich ein Deckelelement anlöten, anschweißen oder ankleben.

Es kann alternativ oder zusätzlich, wie in Figur 5 gezeigt, vorgesehen sein, daß ein Deckelelement 156 mit einer Mehrzahl von Haltelaschen 158 versehen ist, welche jeweils den entsprechenden Aufnahmeräumen 160 der Aufnahmekammern 162 zugeordnet sind.

Eine solche Haltelasche ist an einer Innenseite der Aufnahmekammer 162 anlegbar (wie in Figur 4 gezeigt) oder eine Außenseite. Dadurch wiederum läßt sich das Deckelelement 156 fluiddicht an der Aufnahmekammer fixieren.

Bei dem Vorsehen einer Mehrzahl von Haltelaschen 158, welche den jeweiligen Aufnahmekammern 162 zugeordnet sind, läßt sich dann das entsprechende Deckelelement 156 als Ganzes an dem Aufnahmekammern-Verbund fixieren und dabei fluiddicht druckdicht an diesem fixieren.

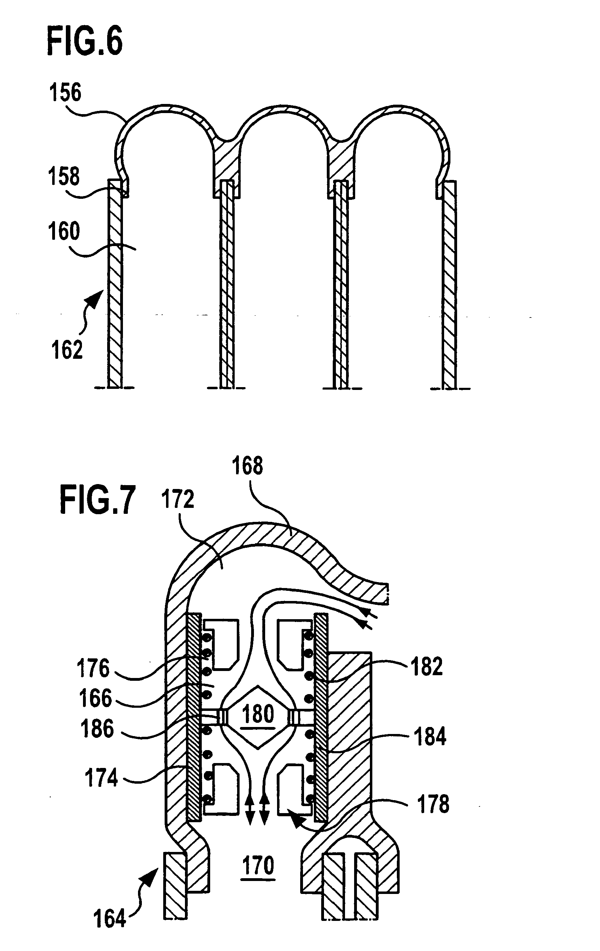

Es kann auch vorgesehen sein, daß jeder Aufnahmekammer 164, wie in Figur 7 gezeigt, ein als Ganzes mit 166 bezeichnetes Rückschlagventil zugeordnet ist. Über ein Deckelelement 168 läßt sich, wie oben beschrieben, eine Fluidverbindung zwischen den einzelnen Aufnahmeräumen 170 des Drucktanks herstellen. Das Deckelelement 168 weist dazu einen Deckelraum 172 auf, der (bei geöffnetem Rückschlagventil 166) in Fluidverbindung mit allen Aufnahmeräumen 170 steht.

In den jeweiligen, den einzelnen Aufnahmeräumen 170 zugeordneten Deckelteilen ist dann jeweils ein solches Rückschlagventil 166 angeordnet, welches bei im wesentlichen verschwindender Druckdifferenz zwischen dem Deckelraum 172 und dem jeweiligen Aufnahmeraum 170 geöffnet ist, so daß die Fluidverbindung hergestellt ist.

Bei dem in Figur 7 gezeigten Ausführungsbeispiel ist ein Rückschlagventil 166 über ein Eingußteil 174 in dem jeweiligen, dem bestimmten Aufnahmeraum 170 zugeordneten Deckelbereich fixiert. In dem Eingußteil 174 sind zwei beabstandete Ventilsitze 176 und 178 gebildet, zwischen welchen ein Ventilteller 180 beweglich angeordnet ist. Der Ventilteller 180 ist dabei so ausgebildet, daß er entweder bei Anliegen an dem Ventilsitz 176 das Ventil schließt, das heißt die Fluidverbindung unterbricht, oder bei Anliegen an dem Ventilsitz 178 die Fluidverbindung zwischen Aufnahmeraum 170 und Deckelraum 172 unterbricht. In einer Zwischenstellung des Ventiltellers 180 ist die Fluidverbindung hergestellt.

Dazu ist der Ventilteller 180 bezüglich des Ventilsitzes 176 mit einer ersten Spiralfeder an diesem gehalten und bezüglich des zweiten Ventilsitzes 178 mit einer zweiten Spiralfeder 184 gehalten. Die beiden Spiralfedern 182 und 184 sind dabei im wesentlichen gleich ausgebildet mit der gleichen Federkonstante, so daß ohne zusätzliche Kraftbeaufschlagung der Ventilteller 180 zwischen den beiden Ventilsitzen 176 und 178 sitzt, ohne den Fluiddurchgang zu sperren.

Tritt nun eine bestimmte Druckdifferenz zwischen dem Deckelraum 172 und dem Aufnahmeraum 170 auf, so bewegt sich der Ventilteller 180 entsprechend der Differenzkraft in Richtung des Ventilsitzes 176 oder 178 und entsprechend schließt das Ventil.

Die Fluidverbindung zwischen dem Aufnahmeraum 170 und dem Deckelelement 168 ist dann unterbrochen, da entsprechende Durchgangsöffnungen 186 im Ventilteller 180 über dem jeweiligen Ventilsitz 176 oder 178 blockiert sind.

Die Druckdifferenz kann dadurch auftreten, daß in dem Deckelelement 168 ein Überdruck oder ein Unterdruck bezüglich des Aufnahmeraums 170 herrscht. Die Bewegung des Ventiltellers 180 tritt ein, wenn unter Berücksichtigung der Trägheit des Ventiltellers 180 und von Reibungseffekten ein bestimmter Differenzdruck (von Null ausgehend) überschritten wird.

Ein Unterdruck im Aufnahmeraum bezüglich des Deckels 172 tritt dann auf, wenn der Aufnahmeraum 170 selber ein Leck aufweist. Durch das zugeordnete Rückschlagventil 166 wird dann verhindert, daß aufgrund des Lecks bezüglich des Aufnahmeraums 170 sich auch die anderen Aufnahmeräume schnell entleeren können.

Ein Unterdruck im Deckelraum 172 kann auftreten, wenn dieser selber ein Leck hat oder ein mit dem Deckelraum 172 in Fluidverbindung stehender anderer Aufnahmeraum ein Leck hat. Durch Schließen des Rückschlagventils 166 über Anfahren des Ventiltellers 180 an den Ventilsitz 176 wird dann verhindert, daß sich der Aufnahmeraum 170 bei Leckage eines anderen Aufnahmeraums vollständig entleeren kann.

Tritt also in irgendeinem Aufnahmeraum ein Leck auf, dann schließt das diesem Aufnahmeraum zugeordnete Rückschlagventil 166 diesen Aufnahmeraum von dem Deckelraum 172 ab, da ein Unterdruck bezüglich des Deckelraums 172 herrscht. Die anderen Aufnahmeräume schließen sich aber ebenfalls über die zugeordneten Rückschlagventile 166 vom Deckelraum 172 ab, da in diesen dann ein Überdruck bezüglich des Deckelraums 172 herrscht. Die Bewegung des Ventiltellers 180 des dem Aufnahmeraum zugeordneten Rückschlagventils, welcher ein Leck aufweist, ist damit entgegengesetzt der Bewegungsrichtung des Ventiltellers 180 der anderen Rückschlagventile.

Durch das Vorsehen von erfindungsgemäßen Rückschlagventilen 166 läßt sich beim Auftreten eines Lecks ein schnelles Entleeren des Drucktanks verhindern.

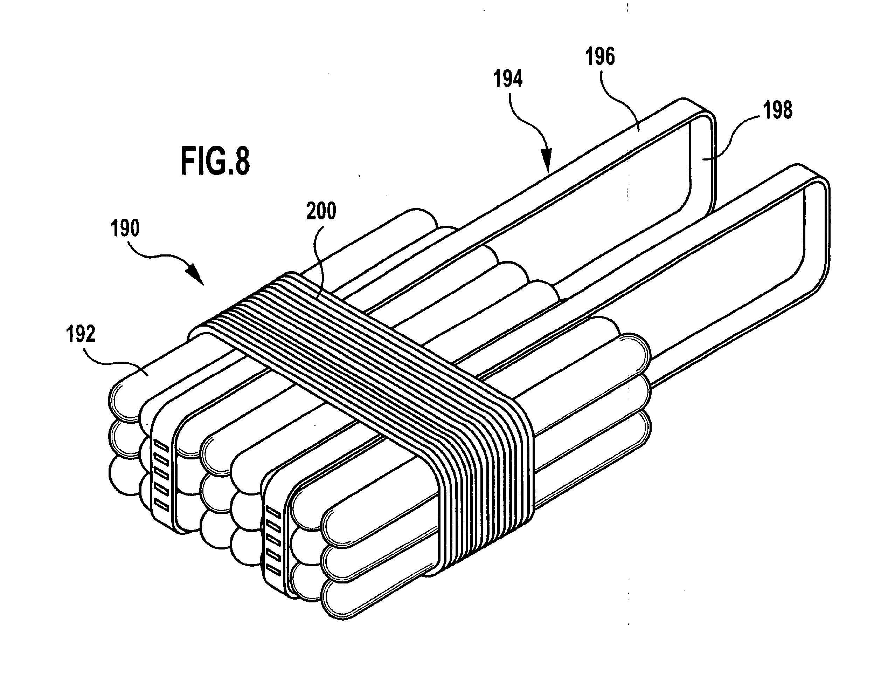

Bei dem Drucktank, welcher in Figur 8 gezeigt und als Ganzes mit 190 bezeichnet ist, ist eine Mehrzahl von Aufnahmekammern 192 vorgesehen, die grundsätzlich so ausgebildet sein können wie oben beschrieben. Der Drucktank 190 ist ferner mit einer Befestigungsvorrichtung 194 versehen, welche zur Fixierung des Drucktanks 190 beispielsweise an einem Fahrzeug dient und/oder an der sich Elemente fixieren lassen. Die Befestigungsvorrichtung 194 umfaßt beispielsweise ein oder mehrere U-förmige oder rechtwinklige Profile 196, welche einen Zwischenraum 198 aufweisen, in welchem teilweise entsprechende Aufnahmekammern 192 angeordnet sind. Die Profile sitzen insbesondere auf einer Oberfläche auf. Über eine Umwicklung 200 ist die Befestigungsvorrichtung 194 an dem Drucktank 190 gehalten oder zusätzlich gesichert, wobei die Wicklungsrichtung quer zu einer Längsrichtung des oder der Profile 196 ist.

Ein Profil kann auch derartig eingebettet sein, daß es nicht auf der Oberfläche einer oder mehrerer außenliegenden Aufnahmekammern aufsitzt, sondern zwischen benachbarten Aufnahmekammern angeordnet ist, ohne über die Oberfläche hinauszuragen (in der Zeichnung nicht gezeigt).

## Patentansprüche

1. Drucktank zur Aufnahme eines unter Druck stehenden Fluids, welcher eine Mehrzahl von Aufnahmekammern (12; 52; 94) mit jeweils einem sich in einer Längsrichtung (14; 56; 96) erstreckenden Aufnahmeraum (20; 54; 92) aufweist, wobei die Aufnahmeräume (20; 54; 92) durch Kammerwände (16a, 16b, 18a, 18b; 58; 98a, 98b, 100a, 100b) begrenzt sind, die Aufnahmeräume (20; 54; 92) in Längsrichtung (14; 56; 96) durch ein gemeinsames Deckelelement (26, 28; 68, 70; 112) geschlossen sind, und eine Umwicklung (30; 84) mit einem Faserverbundwerkstoff vorgesehen ist, welcher das gemeinsame Deckelelement (26, 28; 68, 70; 112) an den Aufnahmekammern (12; 52; 94) hält oder sichert, wobei ein Übergang (32) zwischen dem Deckelelement (26, 28; 68, 70; 112) und Kammerwänden (16a, 16b, 18a, 18b; 58; 98a, 98b, 100a, 100b), an denen das Deckelelement (26, 28; 68, 70; 112) sitzt, glatt ist, und wobei das Deckelelement (26, 28; 68, 70; 112) gewölbt ausgebildet ist mit einer Scheitellinie (82).

2. Drucktank nach Anspruch 1, **dadurch gekennzeichnet, daß** das Deckelelement (26, 28; 68, 70; 112) innerhalb einer Umwicklungsschleife (38) angeordnet ist.

3. Drucktank nach Anspruch 1 oder 2, **dadurch gekennzeichnet, daß** das Deckelelement (26, 28; 68, 70; 112) innerhalb einer Umwicklungskehre (40) angeordnet ist.

4. Drucktank nach einem der vorangehenden Ansprüche, **dadurch gekennzeichnet, daß** im Bereich eines Deckelelementes (26, 28; 68, 70; 112) sich eine Windungsrichtung der Umwicklung (30) von im wesentlichen parallel zur Längsrichtung (14; 56; 96) in quer dazu ändert.

5. Drucktank nach einem der vorangehenden Ansprüche, **dadurch gekennzeichnet, daß** das Deckelelement (26, 28; 68, 70; 112) so ausgebildet ist, daß Wicklungen an dieses anlegbar sind.

6. Drucktank nach einem der vorangehenden Ansprüche, **dadurch gekennzeichnet, daß** das Deckelelement (26, 28; 68, 70; 112) eine glatte Oberfläche aufweist.

7. Drucktank nach einem der vorangehenden Ansprüche, **dadurch gekennzeichnet, daß** das Deckelelement (26, 28; 68, 70; 112) im Querschnitt kreisbogenförmig ist.

8. Drucktank nach einem der vorangehenden Ansprüche, **dadurch gekennzeichnet, daß** das Deckelelement (26, 28; 68, 70; 112) die Form einer Halbzylinder-Schale hat.

9. Drucktank nach einem der vorangehenden Ansprüche, **dadurch gekennzeichnet, daß** das Deckelelernent (26, 28; 68, 70; 112) mit Kammerwänden (16a, 16b, 18a, 18b; 58; 98a, 98b, 100a, 100b) verschweißt oder verklebt ist.

10. Drucktank nach einem der vorangehenden Ansprüche, **dadurch gekennzeichnet, daß** das Deckelelement (68; 70; 112) so ausgebildet ist, daß eine Fluidverbindung zwischen Aufnahmeräumen (54; 92) hergestellt oder herstellbar ist.

11. Drucktank nach einem der vorangehenden Ansprüche, **dadurch gekennzeichnet, daß** ein Aufnahmeraum (92) durch eine Aufnahmehülle (94) aus einem fluiddichten Material begrenzt ist.

12. Drucktank nach Anspruch 11, **dadurch gekennzeichnet, daß** eine Aufnahmehülle (94) gewölbte Kammerwände (98a, 98b) aufweist, welche auf im wesentlichen ebenen Kammerwänden (100a, 100b) sitzen.

13. Drucktank nach Anspruch 12, **dadurch gekennzeichnet, daß** der Abstand gegenüberliegender gewölbter Kammerwände (98a, 98b) größer ist als der Abstand gegenüberliegender ebener Kammerwände (100a, 100b).

14. Drucktank nach einem der Ansprüche 11 bis 13, **dadurch gekennzeichnet, daß** eine Aufnahmehülse (94) durch einen Faserverbundwerkstoff umwickelt ist.

15. Drucktank nach Anspruch 14, **dadurch gekennzeichnet, daß** die Umwicklung so durchgeführt ist, daß eine Faserrichtung im wesentlichen parallel zu einer längeren Seite der Aufnahmehülle (94) ist.

16. Drucktank nach einem der Ansprüche 11 bis 15, **dadurch gekennzeichnet, daß** eine Mehrzahl von Aufnahmehüllen (94) durch Umwicklung mit einem Faserverbundwerkstoff zu einem Aufnahmehüllen-Verbund verbunden sind.

17. Drucktank nach einem der vorangehenden Ansprüche, **dadurch gekennzeichnet, daß** der Faserverbundwerkstoff ein GFK-, ein CFK-Material oder ein faserverstärktes Metall ist.

18. Drucktank nach einem der vorangehenden Ansprüche, **dadurch gekennzeichnet, daß** der Faserverbundwerkstoff imprägniert ist.

19. Drucktank nach einem der vorangehenden Ansprüche, **dadurch gekennzeichnet, daß** einem Aufnahmeraum (170) ein Rückschlagventil (166) zugeordnet ist.

20. Drucktank nach Anspruch 19, **dadurch gekennzeichnet, daß** das oder die Rückschlagventile (166) mit dem Deckelelement (168) verbunden sind.

21. Drucktank nach Anspruch 19 oder 20, **dadurch gekennzeichnet, daß** ein Rückschlagventil (166) so ausgebildet ist, daß dieses schließt, wenn eine bestimmte Druckdifferenz zwischen dem zugeordneten Aufnahmeraum (170) und einem Deckelraum (172) überschritten ist.

22. Drucktank nach einem der vorangehenden Ansprüche, **dadurch gekennzeichnet, daß** ein Deckelelement (156) mit mindestens einer Lasche (158) versehen ist, über welche das Deckelelement (156) bezüglich des Aufnahmeraums fixierbar ist und/oder eine fluiddichte Abdichtung zwischen Deckelelement und Aufnahmeraum herstellbar ist.

23. Drucktank nach einem der vorangehenden Ansprüche, **dadurch gekennzeichnet, daß** eine Aufnahmekammer an einer Stirnseite mit einem Abdichtteil (154) versehen ist, an welchem ein Deckelelement fixierbar ist und/oder über welches eine fluiddichte Abdichtung bezüglich des Deckelelements herstellbar ist.

24. Drucktank nach einem der vorangehenden Ansprüche, **dadurch gekennzeichnet, daß** eine Befestigungsvorrichtung (194) für den Drucktank durch eine Umwicklung (200) an diesem fixiert ist.

## Claims

1. Pressure tank for receiving a pressurized fluid, comprising a plurality of receiving chambers (12; 52; 94) each having a receiving space (20; 54; 92) extending in a longitudinal direction (14; 56; 96), wherein the receiving spaces (20; 54; 92) are delimited by chamber walls (16a, 16b, 18a, 18b; 58; 98a, 98b, 100a, 100b), the receiving spaces (20; 54; 92) are closed in longitudinal direction (14; 56; 96) by a common cover element (26, 28; 68, 70; 112), and there is provided a wrapping (30; 84) with a composite fibre material that holds or secures the common cover element (26, 28; 68, 70; 112) on the receiving chambers (12; 52; 94), wherein a transition (32) between the cover element (26, 28; 68, 70; 112) and chamber walls (16a, 16b, 18a, 18b; 58; 98a, 98b, 100a, 100b), on which the cover element (26, 28; 68, 70; 112) is seated, is smooth, and wherein the cover element (26, 28; 68, 70; 112) is of a curved design with a crest line (82).

2. Pressure tank according to claim 1, **characterized in that** the cover element (26, 28; 68, 70; 112) is disposed inside a wrapping loop (38).

3. Pressure tank according to claim 1 or 2, **characterized in that** the cover element (26, 28; 68, 70; 112) is disposed inside a wrapping turn (40).

4. Pressure tank according to one of the preceding claims, **characterized in that** in the region of a cover element (26, 28; 68, 70; 112) a winding direction of the wrapping (30) changes from substantially parallel to the longitudinal direction (14; 56; 96) to transversely thereof.

5. Pressure tank according to one of the preceding claims, **characterized in that** the cover element (26, 28; 68, 70; 112) is designed in such a way that windings may be laid thereon.

6. Pressure tank according to one of the preceding claims, **characterized in that** the cover element (26, 28; 68, 70; 112) has a smooth surface.

7. Pressure tank according to one of the preceding claims, **characterized in that** the cover element (26, 28; 68, 70; 112) in cross section is circular-arc-shaped.

8. Pressure tank according to one of the preceding claims, **characterized in that** the cover element (26, 28; 68, 70; 112) has the shape of a semicylindrical shell.

9. Pressure tank according to one of the preceding claims, **characterized in that** the cover element (26, 28; 68, 70; 112) is welded or adhered to chamber walls (16a, 16b, 18a, 18b; 58; 98a, 98b, 100a, 100b).

10. Pressure tank according to one of the preceding claims, **characterized in that** the cover element (68; 70; 112) is configured in such a way that a fluid connection between receiving chambers (54; 92) is or can be established.

11. Pressure tank according to one of the preceding claims, **characterized in that** a receiving space (92) is delimited by a receiving enclosure (94) made of a fluid-tight material.

12. Pressure tank according to claim 11, **characterized in that** a receiving enclosure (94) comprises curved chamber walls (98a, 98b) that are seated on substantially flat chamber walls (100a, 100b).

13. Pressure tank according to claim 12, **characterized in that** the spacing between opposite curved chamber walls (98a, 98b) is greater than the spacing between opposite flat chamber walls (100a, 100b).

14. Pressure tank according to one of claims 11 to 13, **characterized in that** a receiving enclosure (94) is wrapped in a composite fibre material.

15. Pressure tank according to claim 14, **characterized in that** the wrapping is carried out in such a way that a fibre direction is substantially parallel to a longer side of the receiving enclosure (94).

16. Pressure tank according to one of claims 11 to 15, **characterized in that** a plurality of receiving enclosures (94) are connected by wrapping in a composite fibre material to form a receiving enclosure combination.

17. Pressure tank according to one of the preceding claims, **characterized in that** the composite fibre material is a GFRP material, a CFRP material or a fibre-reinforced metal.

18. Pressure tank according to one of the preceding claims, **characterized in that** the composite fibre material is impregnated.

19. Pressure tank according to one of the preceding claims, **characterized in that** a non-return valve (166) is associated with a receiving space (170).

20. Pressure tank according to claim 19, **characterized in that** the non-return valve or valves (166) are connected to the cover element (168).

21. Pressure tank according to claim 19 or 20, **characterized in that** a non-return valve (166) is configured in such a way that it closes if a specific pressure difference between the associated receiving space (170) and a cover space (172) is exceeded.

22. Pressure tank according to one of the preceding claims, **characterized in that** a cover element (156) is provided with at least one clip (158), by means of which the cover element (156) is fixable in relation to the receiving space and/or a fluid-tight seal between cover element and receiving space may be produced.

23. Pressure tank according to one of the preceding claims, **characterized in that** a receiving chamber is provided at one end with a sealing part (154), to which a cover element is fixable and/or by means of which a fluid-tight seal in relation to the cover element may be produced.

24. Pressure tank according to one of the preceding claims, **characterized in that** a fastening apparatus (194) for the pressure tank is fixed thereto by means of a wrapping (200).

## Revendications

1. Réservoir sous pression pour la réception d'un fluide sous pression qui présente une pluralité de chambres de réception (12 ; 52 ; 94) avec respectivement un espace de réception (20 ; 54 ; 92) s'étendant dans un sens longitudinal (14 ; 56 ; 96), les espaces de réception (20 ; 54 ; 92) étant délimités par des parois de chambre (16a, 16b, 18a, 18b ; 98a, 98b, 100a, 100b), les espaces de réception (20 ; 54 ; 92) étant fermés dans le sens longitudinal (14 ; 56 ; 96) par un élément de couvercle (26, 28 ; 68, 70 ; 112) commun, et un enroulement (30 ; 84) avec un matériau renforcé par des fibres étant prévu, lequel tient ou fixe l'élément de couvercle (26, 28 ; 68, 70 ; 112) commun sur les chambres de réception (12 ; 52 ; 94), une transition (32) étant lisse entre l'élément de couvercle (26, 28 ; 68, 70 ; 112) et des parois de chambre (16a, 16b, 18a, 18b ; 58 ; 98a, 98b, 100a, 100b) sur lesquelles l'élément de couvercle (26, 28 ; 68, 70 ; 112) siège, l'élément de couvercle (26, 28 ; 68, 70 ; 112) étant réalisé de manière cintrée avec une ligne de sommet (82).

2. Réservoir sous pression selon la revendication 1, **caractérisé en ce que** l'élément de couvercle (26, 28 ; 68, 70 ; 112) est disposé dans une boucle d'enroulement (38).

3. Réservoir sous pression selon la revendication 1 ou 2, **caractérisé en ce que** l'élément de couvercle (26, 28 ; 68, 70 ; 112) est disposé dans un tournant en lacet d'enroulement (40).

4. Réservoir sous pression selon l'une quelconque des revendications précédentes, **caractérisé en ce que** dans la zone d'un élément de couvercle (26, 28 ; 68, 70 ; 112), un sens d'enroulement de l'enroulement (30) se modifie essentiellement parallèlement au sens longitudinal (14 ; 56 ; 96) transversalement à celui-ci.

5. Réservoir sous pression selon l'une quelconque des revendications précédentes, **caractérisé en ce que** l'élément de couvercle (26, 28 ; 68, 70 ; 112) est réalisé de sorte que des enroulements puissent être posés sur celui-ci.

6. Réservoir sous pression selon l'une quelconque des revendications précédentes, **caractérisé en ce que** l'élément de couvercle (26, 28 ; 68, 70 ; 112) présente une surface lisse.

7. Réservoir sous pression selon l'une quelconque des revendications précédentes, **caractérisé en ce que** la section de l'élément de couvercle (26, 28 ; 68, 70 ; 112) est en forme d'arc de cercle.

8. Réservoir sous pression selon l'une quelconque des revendications précédentes, **caractérisé en ce que** l'élément de couvercle (26, 28 ; 68, 70 ; 112) a la forme d'une coque semi-cylindrique.

9. Réservoir sous pression selon l'une quelconque des revendications précédentes, **caractérisé en ce que** l'élément de couvercle (26, 28 ; 68, 70 ; 112) est soudé ou collé à des parois de chambre (16a, 16b, 18a, 18b ; 58 ; 98a ; 98b, 100a, 100b).

10. Réservoir sous pression selon l'une quelconque des revendications précédentes, **caractérisé en ce que** l'élément de couvercle (68 ; 70 ; 112) est réalisé de sorte qu'une liaison fluidique entre des espaces de réception (54 ; 92) soit établie ou puisse être établie.

11. Réservoir sous pression selon l'une quelconque des revendications précédentes, **caractérisé en ce qu'**un espace de réception (92) est délimité par une enveloppe de réception (94) en un matériau étanche au fluide.

12. Réservoir sous pression selon la revendication 11, **caractérisé en ce qu'**une enveloppe de réception (94) présente des parois de chambre (98a, 98b) cintrées qui siègent sur des parois de chambre (100a, 100b) essentiellement planes.

13. Réservoir sous pression selon la revendication 12, **caractérisé en ce que** la distance entre des parois de chambre (98a, 98b) cintrées opposées est plus grande que la distance entre des parois de chambre (100a, 100b) planes opposées.

14. Réservoir sous pression selon l'une quelconque des revendications 11 à 13, **caractérisé en ce qu'**une enveloppe de réception (94) est enveloppée par un matériau renforcé par des fibres.

15. Réservoir sous pression selon la revendication 14, **caractérisé en ce que** l'enroulement est réalisé de sorte qu'un sens de fibre soit essentiellement parallèle à un côté plus long de l'enveloppe de réception (94).

16. Réservoir sous pression selon l'une quelconque des revendications 11 à 15, **caractérisé en ce qu'**une pluralité d'enveloppes de réception (94) est reliée par enroulement avec un matériau renforcé par des fibres en un assemblage d'enveloppe de réception.

17. Réservoir sous pression selon l'une quelconque des revendications précédentes, **caractérisé en ce que** le matériau renforcé par des fibres est un matériau plastique renforcé par des fibres de verre, plastique renforcé par des fibres de carbone ou un métal renforcé par des fibres.

18. Réservoir sous pression selon l'une quelconque des revendications précédentes, **caractérisé en ce que** le matériau renforcé par des fibres est imprégné.

19. Réservoir sous pression selon l'une quelconque des revendications précédentes, **caractérisé en ce qu'**à un espace de réception (170) est associé un clapet antiretour (166).

20. Réservoir sous pression selon la revendication 19, **caractérisé en ce que** le ou les clapets antiretour (166) sont reliés à l'élément de couvercle (168).

21. Réservoir sous pression selon la revendication 19 ou 20, **caractérisé en ce qu'**un clapet antiretour (166) est réalisé de sorte que celui-ci se ferme lorsqu'une pression différentielle déterminée entre l'espace de réception (170) associé et un espace de couvercle (172) est dépassée.

22. Réservoir sous pression selon l'une quelconque des revendications précédentes, **caractérisé en ce qu'**un élément de couvercle (156) est doté d'au moins une languette (158), par laquelle l'élément de couvercle (156) peut être fixé par rapport à l'espace de réception et/ou une étanchéité au fluide entre l'élément de couvercle et l'espace de réception peut être établie.

23. Réservoir sous pression selon l'une quelconque des revendications précédentes, **caractérisé en ce qu'**une chambre de réception est pourvue sur un côté avant d'un élément d'étanchéité (154), sur lequel peut être fixé un élément de couvercle et/ou par lequel une étanchéité au fluide peut être établie par rapport à l'élément de couvercle.

24. Réservoir sous pression selon l'une quelconque des revendications précédentes, **caractérisé en ce qu'**un dispositif de fixation (194) est fixé pour le réservoir sous pression par un enroulement (200) sur celui-ci.
